**Europäisches Patentamt**

**European Patent Office**

**Office européen des brevets**

(19)

(11) Veröffentlichungsnummer : **0 329 142 B1**

(12)

# EUROPÄISCHE PATENTSCHRIFT

(45) Veröffentlichungstag der Patentschrift :
**15.04.92 Patentblatt 92/16**

(51) Int. Cl.⁵ : **B23H 7/10**

(21) Anmeldenummer : **89102690.8**

(22) Anmeldetag : **16.02.89**

(54) **Stromzufuhreinrichtung für bewegliche Elektroden von Funkenerosionsmaschinen.**

(30) Priorität : **16.02.88 DE 3804811**

(43) Veröffentlichungstag der Anmeldung :
**23.08.89 Patentblatt 89/34**

(45) Bekanntmachung des Hinweises auf die
Patenterteilung :
**15.04.92 Patentblatt 92/16**

(84) Benannte Vertragsstaaten :
**CH DE FR GB IT LI LU SE**

(56) Entgegenhaltungen :
**PATENT ABSTRACTS OF JAPAN vol. 10, no.
218 (M-503) 2274 30 Juli 1986, & JP-A-61 56828
(INOUE JAPAX)**

(73) Patentinhaber : **AG für industrielle Elektronik
AGIE Losone bei Locarno
CH-6616 Losone/Locarno (CH)**

(72) Erfinder : **Bühler, Ernst
Salita degli Orti
CH-6616 Losone (CH)
Erfinder : Martignoni, Massimo
CH-6523 Lumino (CH)
Erfinder : Wehrli, Peter
Casa Maestretti
CH-6653 Verscio (CH)
Erfinder : Erba, Mauro
Via Vigizzi 20
CH-6600 Locarno (CH)**

(74) Vertreter : **EGLI-EUROPEAN PATENT
ATTORNEYS
Widenmayerstrasse 5
W-8000 München 22 (DE)**

**Beschreibung**

Die Erfindung betrifft eine Stromzufuhreinrichtung für Laufdrahtelektroden von Funkenerosionsmaschinen gemäß dem Oberbegriff der Ansprüche 1 und 4.

Für das funkenerosive Bearbeiten und verwandte Verfahren werden immer höhere Impulsenergien verwendet, was zu unakzeptabel kurzen Standzeiten der Stromzufuhrelemente führt. Durch die hohen Strombelastungen der Stromzufuhrelemente findet dort ein Materialabtrag statt, der den hohen Verschleiß bedingt.

Bei Drahterosionsmaschinen erfolgt die Einspeisung des Stromes auf die Drahtelektrode normalerweise mit zwei Stromzufuhrelemeneten, wobei sich je ein solches oberhalb und unterhalb des Werkstückes befindet. Die DE-A1-26 53 857 (entsprechend US-A-4 205 212) schlägt bereits vor, zwei oder mehr Stromzufuhrelemente pro Werkstückseite zu verwenden, sowie den Impulsgenerator (Stromquelle) zur besseren Stromaufteilung zweikanalig auszuführen.

Die JP-A-62-34724 zeigt eine Stromzufuhreinrichtung mit mindestens zwei Kontakten und zwei Generatorkanälen, wobei der weiter vom Werkstück entfernt liegende Kontakt mit einer höheren Spannung beaufschlagt werden soll.

Eine gattungsmäßige Stromzufuhreinrichtung ist aus der JP-A-61-236433 bekannt. Um eine bessere Stromverteilung an den einzelnen Kontakten zu erhalten, sind in den Zuleitungen zu den Stromzufuhrkontakten von einer Steuereinrichtung angesteuerete Halbleiterschaltelemente mit Diodenstrecken geschaltet, die auch, wenn sie auf leitend gesteuert sind, als Widerstände dienen. Die Diodenstrekken sind so dimensioniert, daß die Ströme zu den Stromzufuhrkontakten ausgeglichen werden. Die beschriebene Ausführung mit drei Stromzufuhrkontakten weist in der Zuleitung zu dem dem Werkstück am nächsten liegenden Stromzufuhrkontakt die höchste Impedanz, in der nächstfolgenden Zufuhrleitung eine Impedanz mit einem hohen Wert und in der dritten Zufuhrleitung die kleinste Impedanz auf. Diese Stromzufuhreinrichtung besitzt einen relativ hohen Schaltungsaufwand, der wegen der sehr hohen Impulsströme Leistungselemente verlangt, die im allgemeinen kostspielig sind. Ferner ist diese Stromzuführeinrichtung kompliziert, da eine besondere Steuereinrichtung vorgesehen ist.

Moderne Impulsgeneratoren, wie sie beispielsweise in der DE-A1-36 39 256 beschrieben sind, erzeugen Impulsströme bis zu 1000A. Pro Volt unnötig vorhandenem Spannungsabfall wird also eine unnötige Impulsverlustleistung von 1 kW erzeugt. Es ist also erforderlich eine zufriedenstellende, gleichförmige Stromverteilung zu ermöglichen.

Der Erfindung liegt die Aufgabe zugrunde, die gattungsbildende Stromzufuhreinrichtung derart weiter zu bilden, daß sie bei zuverlässiger Arbeitsweise eine einfache Konstruktion aufweist.

Diese Aufgabe wird bei einer gattungsbildenden Stromzuführeinrichtung durch die im kennzeichnenden Teil der Patentansprüche 1 bzw. 4 angegebenen Merkmale gelöst.

Vorteilhafte Weiterbildungen des Erfindungsgegenstandes sind in den Unteransprüchen angegeben.

Durch die erfindungsgemäßen Maßnahmen erhält man eine sehr gleichmäßige Stromverteilung, d.h. die Strombelastung der einzelnen Stromzuführungskontakte kann sehr gleichmäßig sein und so eingestellt werden, daß durch diese elektrische Belastung keine nennenswerte Abnutzung erfolgt. Die Standzeit der Stromzuführungskontakte kann damit im Extremfall die Maschinenlebensdauer erreichen. Diese vorteilhafte Arbeitsweise wird mit geringem technischen Aufwand erreicht, da keine komplizierten Schaltungskreise oder Steuereinrichtungen erforderlich sind. Genauer gesagt, nur mit passiven und kostengünstigen Elementen läßt sich eine sehr gleichmäßige Strombelastung an den Stromzuführungskontakten erhalten. Auch wird durch die erfindungsgemäßen Maßnahmen eine hoher Wirkungsgrad der Stromübertragung erhalten.

Bei optimaler Auslegung der Stromzufuhreinrichtung kann sogar ein alter Traum verwirklicht werden, nämlich die Stromzufuhreinrichtung gleichzeitig als Führungselement für die Laufdrahtelektrode zu verwenden, womit der zusätzliche Vorteil auftritt, daß die Stromzufuhr um die gewonnene Distanz der Elektrodenführung näher bei der Arbeitszone ist, was erhebliche Leistungsverluste verhindert.

Im folgenden wird die Erfindung anhand von Ausführungsbeispielen im Zusammenhang mit der Zeichnung ausführlich erläutert. Es zeigt:

Fig.1: Eine elektrisches Ersatzschaltbild für vier kurzgeschlossene Einzelkontakte;

Fig.2: Ein erstes Ausführungsbeispiel der Erfindung mit einer durch paarweise induktive Gegenkopplung der Teilströme erzwungenen gleichmäßigen Stromverteilung;

Fig.3: Ein weiteres Ausführungsbeispiel der Erfindung mit abgestimmten Impedanzen pro Einzelkontakt;

Fig.4: Eine Weiterbildung der Mehrfachstromzufuhr mit abgestimmten Impedanzen, welche aus einem Stück gefertigt werden kann; und

Fig.5; Ein weiteres Ausführungsbeispiel mit einer rotationssymmetrischen Stromzufuhr mit wendelförmiger Berührungslinie.

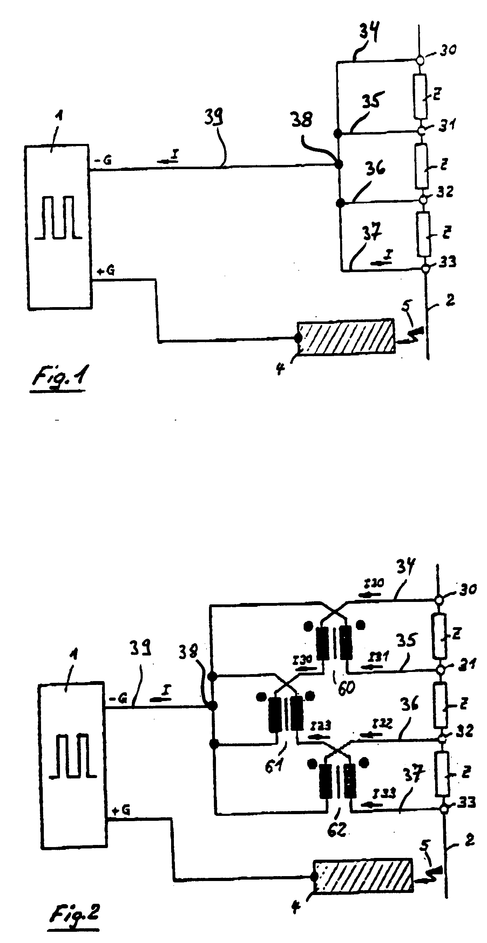

Fig. 1 illustriert die Nachteile von Mehrfachstromzuführungen ohne die erfindungsgemäße Kompensation.

Ein Impulsgenerator 1 liefert über seine Ausgangsklemmen -G und +G, ein Kabel 39, einen Verteiler 38 und Zuleitungen 34, 35, 36 und 37 Bearbeitungsimpulse auf Einzelkontakte 30, 31, 32 und 33, die Schleifkontakte sind, längs denen eine Laufdrahtelektrode 2 entlanggleitet. Die nicht zuverlässigen ohmschen und induktiven Komponenten der Elektrode zwei zwischen den Einzelkontakten 30, 31, 32 und 33 sind durch Impedanzen Z dargestellt. Man erkennt sofort den Effekt dieser Anordnung. Dieser Impulsstrom der Ausgangsklemme -G konzentriert sich theoretisch allein auf den untersten Einzelkontakt 33. Da die Einzelkontakte unter sich ja über den Verteiler 38 kurzgeschlossen sind und im allgemein vernachlässigbare Eigenimpedanzen aufweisen, wirken die Impedanzen Z zwischen den Einzelkontakten 30-33 als Stromteiler mit einem Kurzschluß. Die Folge ist natürlich, daß der gesamte Impulsstrom auf den Kurzschlußpfad, d.h. auf den der Arbeitszone 5 am nächsten stehenden Einzelkontakt 33 kommutiert. Dies gilt nicht nur für Mehrfachkontakte mit diskreten Einzelkontakten. Man stellt auch bei großflächen Einfachkontakten fest, daß immer Teil der Auflagefläche zwischen Kontakt und Elektrode zerstört wird, der näher bei der Arbeitszone liegt. Wenn nämlich ein kritischer Wert des Impulsstromes pro Kontakt von ungefähr 200 A überschritten wird, gibt es keine heute bekannten Werkstoffe mehr, die nicht durch rein ohmsche Überhitzung an der meist mikroskopisch kleinen Kontaktstelle geschmolzen oder gar verdampft würden. Andererseits sind die hohen Impulsströme genau aus dem gleichen Grunde erforderlich, nämlich um Kurzschlüsse zwischen dem Werkstück 4 und der Elektrode 2 in Mikrosekundenbereich durch Materialverdampfung zu eliminieren.

Mit der Erfindung erhält man dagegen eine sehr gleichmäßige Stromverteilung auf die Einzelkontakte, womit man auch die Höhe des Impulsstromes pro Kontakt unterhalb des kritischen Wertes halten kann und trotzdem in der Arbeitszone 5 die gewünschten sehr hohen Impulsströme erreicht. Mit den Maßnahmen nach der Erfindung erhält man eine nahezu perfekte Aufteilung des Impulsstromes auf unschädliche Werte. In 100-Stundentests konnte kein meßbarer Verschleiß nachgewiesen werden, während er bei der Anordnung gemäß Fig. 1 typischerweise bei etwa 300 μm liegt.

Fig. 2 zeigt ein erstes Ausführungsbeispiel der Erfindung. Diese Variante ist gut geeignet für hochenergetische Kurzimpulse, da sie außer den in der Elektrode 2 (Einzelimpedanzen Z) naturgemäß vorhandenen Spannungsabfällen keine zusätzlichen Verluste erzeugt. In die Zuleitungen 34, 35, 36 und 37, d.h. zwischen die einzelnen Zuführkontakte 30, 31, 32 und 33 und den Verteiler 38 bzw. die Ausgangsklemme -G des Impulsgenerators 1 werden Impulstransformatoren 60, 61 und 62 geschaltet. Strebt man eine gleichförmige Verteilung der Teilströme an, so werden Impulstransformatoren 60, 61 und 62 im Verhältnis 1:1 gewickelt. Andere Übersetzungsverhältnisse können für Sonderfälle nützlich sein. Die einzelnen Wicklungen der Transformatoren sind nun so in die Zuleitungen geschaltet, daß immer Teilströme I30 bis I33 benachbarte, nebeneinanderliegender Stromzuführkontakte nach dem Transformatorprinzip verknüpft werden. Weiterhin sind die Transformatoren so geschaltet, daß die durch jeweils einen Transformator fließenden Teilströme gegenläufig durch den Kern geführt sind, so daß sich deren Magnetflüsse kompensieren, wenn die Ströme gleich groß sind. Andernfalls wird eine Kompensationsspannung induziert. Die Anordnung und Verschaltung der Impulstransformatoren 60, 61 und 62 in Fig. 2 ist eine von vielen möglichen. Entscheidend ist, daß alle Teilströme I30 bis I33 irgendwie miteinander gegengekoppelt sind. Im vorliegenden Beispiel ist I30 mit I33 gegengekoppelt, I30 wiederum mit I33 und I33 schließlich mit I32.

Unter der Annahme, daß ein normaler 0,25 mm Messing-63-Draht als Elektrode 2 dient, der Impulsstrom 1 eine Amplitude von 500 A und eine Ableitung nach der Zeit von 500 A/μs aufweist und daß die Abstände zwischen den Einzelkontakten 30-33 je 5 mm betragen, werden Impedanzen Z näherungsweise zu 7 mΩ resistiv und 5 nanno-Henry induktiv. Es ist dabei gesamthaft eine Spitzenverlustleistung von 1,5 KW über den Impedanzen Z zu erwarten und zwischen den Einzelkontakten 32 und 33 ein resistiver Spannungsabfal von 3 V und ein induktiver Spannungsabfall von 2 V, was einen resultierenden Spannungsabfall von typisch 3,6 V bewirkt. Daraus sieht man, daß der Impulstransformator 62 mit einer notwendigen Spannungszeitfläche von wenigen μVs sehr keine gebaut werden kann. Im allgemeinen wird es genügen, auf einen hochpermeablen Ferritring von etwa 15 mm Durchmesser je eine Windung aufzubringen. Die restlichen Impulstransformatoren 60, 61 sind noch weniger beansprucht.

Für den Impulsstrom I stören die Impulstransformatoren 60, 61 und 62 in keiner Weise, da sie nur differentiell wirken. Nebenbei sei bemerkt, daß diese Variante auch für Mehrkanalbearbeitung mittels eines Monokanalgenerators verwendet werden könnte.

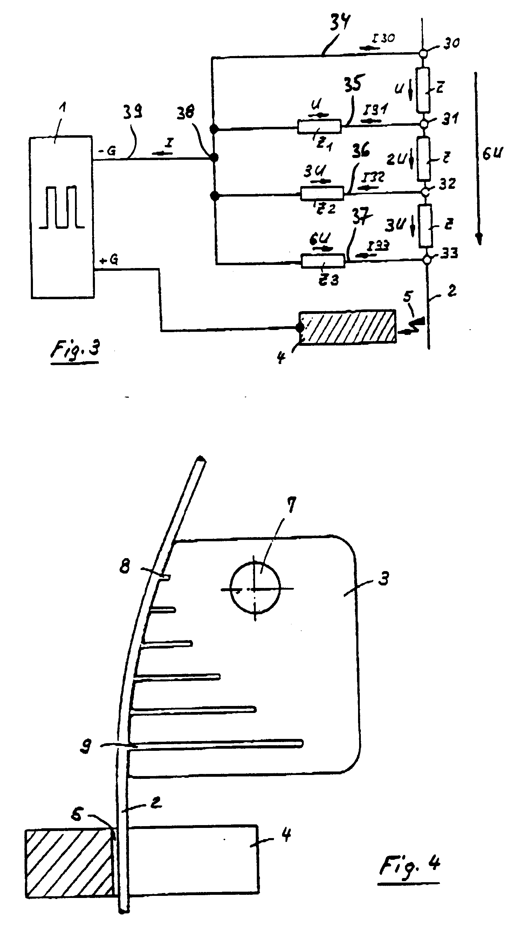

Fig. 3 zeigt eine zweite Lösungsvariante mit abgestimmten Zusatzimpedanzen, Z1, Z2, Z3. In die Zuleitungen 35, 36 und 37 ist also je eine Zusatzimpedanz Z1, Z2 bzw. Z3 geschaltet, während in die am weitesten von der Arbeitszone entfernt liegende Zuleitung 34 keine Zusatzimpedanz eingeschaltet ist. Die Zusatzimpedanzen Z1, Z2 und Z3 bringen zwar auch Zusatzverluste in der Größenordnung von etwa 70% der Verluste, die in den Impedanzen Z der Elektrode 2 entstehen. Die Verwendbarkeit dieser Variante der Erfindung für lange Impulse und selbst für Gleichstrom sowie interessante, nachfolgend noch diskutierte Möglichkeiten überwiegen jedoch beim weitem diesen Nachteil.

Durch die Impedanz Z zwischen den Einzelkontakten 31 und 30 fließt nur der Teilstrom I30. Der Spannungsabfall an dieser Impedanz sei dann U. Es sei jetzt gefordert, daß alle Teilströme I30, I31, I32 und I33 gleich groß sind. Damit fließt auf der Strecke zwischen den Einzelkontakten 32 und 31 ein Strom entsprechend I30 + I31. Der Spannungsabfall in diesem Bereich ist also 2U. In entsprechender Weise ist im Bereich zwischen den Einzelkontakten 31 und 32 der Spannungsabfall gleich 3U. Bei n hintereinandergeschalteten Einzelkontakten ist der Spannungsabfall zwischen den Einzelkontakten n und n-1 gerade (n-1 · U). Da bekanntlich die Summe der Maschenspannungen immer Null ist, muß bei idealer Stromverteilung, d.h. wenn alle Teilströme gleich groß sind, der Spannungsabfall in der Impedanz Z1 gleich U sein, der Spannungsabfall in der Impedanz Z2 gleich 3U und der in der Impedanz Z3 gleich 6U sein. Hier sieht man noch einmal deutlich, wie falsch die Maßnahme der eingangs genannten japanischen Anmeldungen ist, eine günstige Stromverteilung mit konstanten Spannungsabfällen erreichen zu wollen.

Für beliebig viele Teilkontakte 30 ... $n_{max}$ ergibt sich für die einzelnen Impedanzen Z1, Z2, Z3... Zn eine Abstufung nach einer unendlichen Reihe, nämlich: 1, 3, 6, 10, 15, 21, 28, 36, 45, 55, 66 ... oder allgemein ausgedrückt:

$$Z_n = Z_{(n-1)} + Z_1 \cdot n$$

wobei n die Einzelkontaktnummer bezeichnet und $Z_n$ die Zusatzimpedanz des n-ten Teilkontaktes. $Z_o$ wird zu Null und Z1 soll wenigstens annähernd der Impedanz Z zwischen zwei Teilkontakten 30-33 entsprechen.

Die Realisierung der Zusatzimpedanzen Z1, Z2, Z3 kann in verschiedenster Weise erfolgen. Eine Möglichkeit ist, die Zuleitungen zu den Einzelkontakten 30-33 in Querschnitt und/oder Länge abzustimmen. Eine weitere Möglichkeit ist, die Einzelkontakte 30-33 selbst als Impedanzen Z1, Z2, Z3 auszulegen.

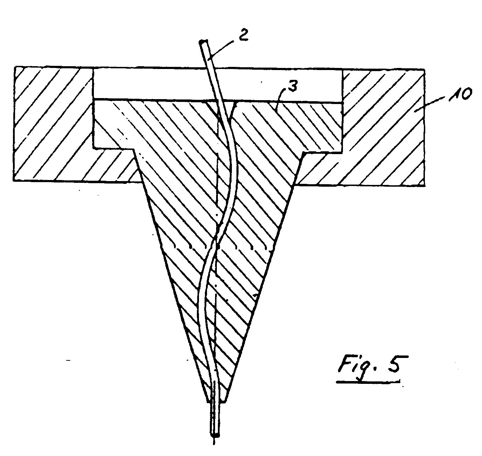

Fig. 4 zeigt ein Beispiel für die letzte Variante, bei der ein Mehrfachstromkontakt 3 aus einer millimeterdünnen Scheibe herausgearbeitet wird. Hierbei werden in Längsrichtung der Berührungslinie mit der Elektrode 2 Schlitze 8, 9 von der Berührungslinie her so angebracht, daß ein kammförmiges Gebilde entsteht mit entsprechend der vorerwähnten Abstufung gegen die Arbeitszone hin verlängerten Zinken, welche jeweils einen Einzelkontakt bilden. Durch die unterschiedliche Länge der Zinken haben diese auch unterschiedliche Impedanzwerte entsprechend der gewünschten Abstufung. Die Schlitze müssen nicht ganz durchgehend sein, um Schwingungsprobleme bei längeren Einzelkontakten zu eliminieren. Es geht ja letztlich nur darum, die örtliche Leitfähigkeit im Werkstoff so zu beeinflussen, daß die Zusatzimpedanzen Z1, Z2 Z3 ... gebildet werden. Die eingearbeiteten Schlitze 8 ... 9 können nachträglich auch wieder mit einem schlecht leitenden Füllstoff geschlossen werden. Eine in Fig. 4 erkennbare Bohrung 7 dient zum Anschluß an die Ausgangsklemme -G des Impulsgenerators 1.

Die Zahl der Einzelkontakte sollte möglichst hoch sein. Eine untere Grenze sind etwa vier Einzelkontakte. Je höher die obere Grenze gewählt wird, umso niedriger und damit ungefährlicher können die pro Einzelkontakt zu übertragenden Ströme festgelegt werden. Es sind jetzt Schichtwerkstoffe in Entwicklung, die nur in Schichtrichtung leitfähig sind, quer dazu jedoch isolierend. Die Schichtdicken sind dabei kleiner als 1 μm. Durch entsprechende Formgebung könnte ein solcher Werkstoff zur Stromübergabe sehr geeignet sein. Pro mm Kontaktlänge würden dabei über 1000 Einzelkontakte mit zugeordneter Impedanz Zn entstehen. Der Werkstoffwahl kommt eine große Bedeutung zu. Es werden zum Teil nämlich wieder einander widersprechende Eigenschaften gefordert. Einerseits wäre eine sehr gute Leitfähigkeit beim Stromaustritt gegen die Elektrode 2 vorteilhaft, um die Joul'sche Erwärmung ($I^2 \cdot R$) herabzusetzen; andererseits ist ein niedriger Leitwert erwünscht, um die Zusatzimpedanzen Z1, Z2, Z3 ... schon mit kleinen Längen aber großen Querschnitten realisieren zu können. Ferner soll der Werkstoff an den Berührungspunkten zur Elektrode 2 sehr hart sein und gute Gleiteigenschaften in Verbindung mit dem Elektrodenmaterial aufweisen. Diese Eigenschaften können nach der Bearbeitung noch örtlich modifiziert werden, z.B. durch Aufbringen von dünnen Beschichtungen. Gute Möglichkeiten bieten die seit kurzer Zeit verfügbaren leitenden Keramiken wie Ti (CN)-Ti $B_2$, Ti (CN)-Cr$_3$ $C_2$, Ti $B_2$ (Titanborid), Si$_3$ $N_4$ (Siliciumnidrid) und Ci$_3$ $N_4$-Al$_2$ $O_3$, (Sialon). Auch gibt es unterdessen eine große Vielfalt solcher Stoffe, die dank einem genau dosiert eingebrachten Fremdmaterial (Dotierung) eine wählbare Leitfähigkeit aufweisen, die auf einer Ionenwanderung basiert. Es ergibt sich dabei auch die Möglichkeit, von einem schwach dotierten Grundmaterial auszugehen und nachträglich durch gezielte Diffusion mit dem entsprechenden Fremdmaterial die Leitfähigkeit örtlich an der Oberfläche zu erhöhen, ähnlich den bei der Halbleiterfertigung angewandten Verfahren.

Fig. 5 zeigt eine Ausführungsform der Erfindung, bei der den Möglichkeiten der leitenden Keramik noch konsequenter Rechnung getragen wird und bei dem die Anzahl der Einzelkontakte gegen unendlich konvergiert. Generell gibt es keinen Grund, die Anzahl der Einzelkontakte nicht gegen unendlich streben zu lassen, sofern nur eine gleichmäßige Stromaufteilung garantiert bleibt. Je höher die Zahl der Einzelkontakte wird, desto geringer kann die Strombelastung pro Einzelkontakt werden, wenn man insgesamt einen bestimmten Strom (von z.B. 1000 A) einspeisen will. Konvergiert die Anzahl der Einzelkontakte gegen unendlich, so konvergiert die Strombelastung pro Einzelkontakt erfreulicherweise gegen Null. Eine Vermehrung der Anzahl der Einzelkontakte erhält man im Ergebnis dadurch, daß man eine ununterbrochene, längere Berührungslinie zwischen einem Mehrfachkontakt 3 und der Elektrode 2 vorsieht. Ist diese Linie lang genug, so sind die vergleichsweise geringen Leitfähigkeiten von Keramiken durchaus genügend. Eine gleichmäßige Stromverteilung wird über eine gezielte Querschnittsveränderung in abnehmender Weise gegen die Arbeitszone hin erreicht. Eine numerische Berechnung der erforderlichen Querschnitte ist nicht ganz einfach, da der Stromfluß in der Keramik räumlich erfolgt. Durch die Methode der finiten Elemente ist es aber möglich, mit Hilfe eines Rechners die optimale Form des Mehrfachkontaktes 3 nach Fig. 5 zu bestimmen. Im Prinzip ist der Mehrfachkontakt kegelstumpfförmig ausgebildet und hat damit in Richtung zur Arbeitszone hin eine Querschnittsabnahme. Dabei erfolgt die Einspeisung des Gesamtstromes im Bereich des größten Durchmessers, also an dem der Arbeitszone entfernt liegenden Bereich der Stromzuführung 3. Damit ergeben sich für die einzelnen Teilströme unterschiedlich lange Wege bzw. Zuleitungen, wobei die Zuleitung und damit die Impedanz zu dem "Einzelkontakt", der am nächsten zur Arbeitszone liegt, am größten ist u.s.w.

Nach einer weiteren Variante der Erfindung ist die Berührungslinie zwischen der Elektrode 2 und der Stromzuführung 3 wendelförmig. Dies bringt einen besonders gedrängten und für Spülvorrichtungen günstigen Aufbau. Eine wendelförmige Bohrung kann heute dank den verfügbaren numerisch gesteuerten Senkerosionsmaschinen leicht erzeugt werden. Die Bohrung kann dabei erheblich größer sein als der Durchmesser der Elektrode 2. Der freie Querschnitt der Bohrung kann dabei auch zum automatischen Einfädeln der Elektrode 2 in eine Startlochbohrung mittels eines Hochdruckwassserstrahles dienen. Da die Elektrode während der Bearbeitung unter mechanischer Zugspannung steht, erhält man bei der wendelförmigen Bohrung auch Kraftkomponenten, die senkrecht auf der Berührungsfläche stehen, wodurch ein ausreichender Kontaktdruck erzeugt wird.

Wie aus Fig. 5 zu erkennen ist, übernimmt ein Kontaktring 10 die Halterung des Mehrfachkontaktes 3 und dient gleichzeitig als elektrische Verbindung zur Ausgangsklemme -G des Impulsgenerators 1.

Da die Mehrfachkontakte nach der Erfindung keinem nennenswerten Verschleiß mehr unterworfen sind, gibt es auch keinen Grund mehr, eine separate Elektrodenführung aus Saphir oder Diamant vorzusehen. Dies bringt den großen Vorteil, daß der Mehrfachkontakt dadurch näher bei der Arbeitszone angeordnet werden kann, was natürlich auch die zwischen der Stromzuführung und der Arbeitszone liegenden Impedanzen der Elektrode 2 verringert. Hierdurch werden auch die Stromübertragungsverluste weiter verringert.

## Patentansprüche

1. Stromzuführeinrichtung für Laufdrahtelektroden (2) von Funkenerosionsmaschinen mit mehreren, in Längsrichtung der Laufdrahtelektrode (2) hintereinander angeordneten Stromzuführungskontakten (30, 31, 32, 33), die über Zuleitungen (34, 35, 36, 37) an eine Stromquelle (1) angeschlossen sind, wobei in den Zuleitungen (34, 35, 36, 37) Bauelemente (60, 61, 62) angeordnet sind, die derart dimensioniert und verschaltet sind, daß unter Berücksichtigung des Spannungsabfalls längs der Laufdrahtelektrode (2) die an den einzelnen Stromzuführungskontakten (30, 31, 32, 33) eingespeisten Teilströme (I30, I31, I32, I33) im wesentlichen gleich groß sind,
dadurch gekennzeichnet,
daß die in den Zuleitungen (34, 35 36, 37) angeordneten Bauelemente (60, 61, 62) eine induktive Gegenkoppelung der Teilströme (I30, I31, I32, I33) bewirken.

2. Stromzuführeinrichtung nach Anspruch 1,
dadurch gekennzeichnet,
daß die Zuleitungen (34, 35 36, 37) auf die Stromzuführungskontakte (30, 31, 32, 33) paarweise über ferromagnetische Kerne (60, 61, 62, 63) transformatorisch gegengekoppelt sind.

3. Stromzuführeinrichtung nach Anspruch 2,
dadurch gekennzeichnet,
daß die transformatorische Gegenkoppelung über Ferrit-Ringkerne erfolgt.

4. Stromzuführeinrichtung für Laufdrahtelektroden (2) von Funkenerosionsmaschinen mit mehreren, in Längsrichtung der Laufdrahtelektrode (2) hintereinander angeordneten Stromzuführungskontakten (30, 31, 32, 33), die über Zuleitungen (34, 35, 36, 37) an eine Stromquelle (1) angeschlossen sind, wobei in der Zuleitungen (34, 35, 36, 37) Bauelemente (Z1, Z2, Z3, Zn) angeordnet sind, die derart dimensioniert und verschaltet sind, daß unter Berücksichtigung des Spannungsabfalls längs der Laufdrahtelektrode (2) die an den einzelnen Stromzuführungskontakten (30, 31, 32, 33) eingespeisten Teilströme (I30, I31, I32, I33) im wesentlichen gleich groß sind,
dadurch gekennzeichnet,
daß die Baueleme Einzelimpedanzen (Z1, Z2, Z3, Zn) sind die Spannungsabfälle längs der Laufdrahtelektrode (2) zwischen den Stromzuführungskontakten (30, 31, 32, 33) gerade kompensieren, und

daß die Einzelimpedanzen (Z1, Z2, Z3, Zn) durch ungleiche Länge und/oder ungleichen Querschnitt der Zuleitungen zu den Einzelkontakten oder durch eine ungleiche Länge und/oder einen ungleichen Querschnitt der Einzelkontakte selbst gebildet sind.

5. Stromzuführeinrichtung nach Anspruch 4,
dadurch gekennzeichnet,
daß die Einzelkontakte aus leitfähiger keramik sind.

6. Stromzuführeinrichtung nach Anspruch 4 oder 5,
dadurch gekennzeichnet,
daß die Einzelkontakte durch kammartige Einschnitte (8, 9) ungleicher Länge in eine Stromzufuhrplatte (3) gebildet sind.

7. Stromzuführeinrichtung nach Anspruch 4 oder 5,
dadurch gekennzeichnet,
daß eine gegen unendlich strebende Anzahl von Einzelkontakten vorgesehen ist dergestalt, daß die Elektrode auf einer Linie gleichmäßig auf einer Stromzufuhreinrichtung aufliegt, wobei die unterschiedlichen Impedanzen durch eine Querschnittsverminderung in Richtung zur Arbeitszone hin gebildet sind.

8. Stromzuführeinrichtung nach Anspruch 7,
dadurch gekennzeichnet,
daß die Stromzufuhreinrichtung (3) durch einen in Richtung zur Arbeitszone (5) hin konisch spitz zulaufenden Rotationskörper gebildet ist, der eine durch sein Inneres verlaufende wendelförmige Durchgangsöffnung besitzt, durch welche die Elektrode (2) hindurch verläuft, wobei der Bearbeitungsstrom am größeren Ende des Rotationskörpers eingespeist wird.

9. Stromzuführeinrichtung nach Anspruch 4,
dadurch gekennzeichnet,
daß in die Zuleitung (34) zu dem am weitesten von der Arbeitszone (5) entfernten Einzelkontakt (30) keine Impedanz zwischengeschaltet ist und daß in die nachfolgenden Zuleitungen Impedanzen Zn eingeschaltet sind, deren Impedanzwert Zn folgender Beziehung gehorcht:

$$Zn = Z(n-1) + Z1 \times n$$

wobei n die Ordnungszahl des Stromzuführungskontaktes in Richtung zur Arbeitszone und Z1 näherungsweise die Impedanz der Elektrode (2) zwischen zwei Einzelkontakten bezeichnet.

10. Stromzuführeinrichtung nach einem der Ansprüche 1 bis 8,
dadurch gekennzeichnet,
daß sie zusätzlich die Funktion der Elektrodenführung übernimmt.

**Claims**

1. Current-supplying device for continuous-wire electrodes (2) of spark erosion machines, having a plurality of current-supplying contacts (30, 31, 32, 33) which are arranged behind one another in the longitudinal direction of the continuous-wire electrode (2) and which are connected to a current source (1) by way of supply lines (34, 35, 36, 37), components (60, 61, 62) being arranged in the supply lines (34, 35, 36, 37) and being dimensioned and connected up such that, taking into account the voltage drop along the continuous-wire electrode (2), the partial currents (I30, I31, I32, I33) fed to the individual current-supplying contacts (30, 31, 32, 33) are of substantially equal size,
characterized in that
the components (60, 61, 62) arranged in the supply lines (34, 35, 36, 37) effect an inductive countercoupling of the partial currents (I30, I31, I32, I33).

2. Current-supplying device according to Claim 1,
characterized in that
the supply lines (34, 35, 36, 37) are countercoupled in the manner of a transformer onto the current-supplying contacts (30, 31, 32, 33) in pairs by way of ferromagnetic cores (60, 61, 62, 63).

3. Current-supplying device according to Claim 2,
characterized in that
the countercoupling in the manner of a transformer is effected by way of ferrite toroidal cores.

4. Current-supplying device for continuous-wire electrodes (2) of spark erosion machines, having a plurality of current-supplying contacts (30, 31, 32, 33) which are arranged behind one another in the longitudinal direction of the continuous-wire electrode (2) and which are connected to a current source (1) by way of supply lines (34, 35, 36, 37), components (Z1, Z2, Z3, Zn) being arranged in the supply lines (34, 35, 36, 37) and being dimensioned and connected up such that, taking into account the voltage drop along the continuous-wire elec-

# EP 0 329 142 B1

trode (2), the partial currents (I30, I31, I32, I33) fed to the individual current-supplying contacts (30, 31, 32, 33) are of substantially equal size,

characterized in that

the components are individual impedances (Z1, Z2, Z3, Zn) which just compensate the voltage drops along the continuous-wire electrode (2) between the current-supplying contacts (30, 31, 32, 33), and in that the individual impedances (Z1, Z2, Z3, Zn) are formed by an unequal length and/or unequal cross-section of the supply lines to the individual contacts or by an unequal length and/or an unequal cross-section of the individual contacts themselves.

5. Current-supplying device according to Claim 4,

characterized in that

the individual contacts are made of conductive ceramic.

6. Current-supplying device according to Claims 4 or 5,

characterized in that

the individual contacts are formed by comb-like incisions (8, 9) of unequal length in a current-supplying plate (3).

7. Current-supplying device according to Claims 4 or 5,

characterized in that

a number tending to infinity of individual contacts is provided such that the electrode on one line bears evenly on a current-supplying device, the different impedances being formed by a reduction in cross-section in the direction of the operating zone.

8. Current-supplying device according to Claim 7,

characterized in that

the current-supplying device (3) is formed by a rotary body which tapers conically to a point in the direction of the operating zone (5) and which has a helical through opening running through its interior, through which through openings the electrode (2) runs, the processing current being fed to the larger end of the rotary body.

9. Current-supplying device according to Claim 4,

characterized in that

there is no impedance placed in the supply line (34) to the individual contact (30) furthest away from the operating zone (5), and in that impedances Zn are connected in the subsequent supply lines, the impedance value Zn of which impedances obeys the following equation:

$$Zn = Z(n-1) + Z1 \times n$$

where n is the ordinal number of the current-supplying contact in the direction of the operating zone and Z1 is approximately the impedance of the electrode (2) between two individual contacts.

10. Current-supplying device according to one of Claims 1 to 8,

characterized in that

it additionally takes on the function of guiding the electrodes.


## Revendications

1. Dispositif d'amenée de courant pour électrodes mobiles en fil (2) de machines d'électro-érosion comportant plusieurs contacts (30, 31, 32, 33) d'amenée de courant qui sont disposés les uns à la suite des autres dans la direction longitudinale de l'électrode mobile en fil (2), et qui sont raccordés à une source de courant (1) via des conducteurs d'alimentation (34, 35, 36, 37), des composants (60, 61), 62) étant disposés sur les conducteurs d'alimentation (34, 35, 36, 37), et présentant des dimensions et des connexions telles qu'en tenant compte de la chute de tension le long de l'électrode mobile en fil (2), les courants partiels (130, 131, 132, 133) fournis aux différents contacts d'amenée de courant (30, 31, 32, 33) soient sensiblement égaux,

caractérisé en ce que

les composants (60, 61, 62) disposés sur les conducteurs d'amenée de courant (34, 35, 36, 37) provoquent une contre-réaction inductive des courants partiels (130, 131, 132, 133).

2. Dispositif d'amenée de courant selon la revendication 1,

caractérisé en ce que

les conducteurs d'amenée de courant (34, 35, 36, 37) aux contacts d'amenée de courant (30, 31, 32, 33) sont couplés en contre-réaction par paires en transformateur par des noyaux ferromagnétiques (60, 61, 62, 63).

3. Dispositif d'amenée de courant selon la revendication 2,

caractérisé en ce que

l'accouplement en contre-réaction et en transformateur est réalisé au moyen de noyaux annulaires en ferrite.

4. Dispositif d'amenée de courant pour des électrodes mobiles en fil (2) de machines d'électro-érosion comportant plusieurs contacts d'amenée de courant (30, 31, 32, 33) qui sont disposés les uns à la suite des autres dans la direction longitudinale de l'électrode mobile en fil (2) et qui sont raccordés à une sourse de courant (1) via des conducteurs d'amenée de courant (34, 35, 36, 37), des composants (Z1, Z2, Z3, Zn) étant disposés sur les conducteurs d'amenée de courant (34, 35, 36, 37), et présentant des dimensions et des connexions telles qu'en tenant compte de la chute de tension le long de l'électrode mobile en fil (2), les courants partiels (130, 131, 132, 133) fournis aux différents contacts d'amenée de courant (30, 31, 32, 33) soient sensiblement égaux,

caractérisé en ce que

les impédances individuelles (Z1, Z2, Z3, Zn) des composants sont celles qui compensent exactement les chutes de tension le long de l'électrode mobile en fil (2) entre les contacts d'amenée de courant (30, 31, 32, 33) et en ce que les impédances individuelles (Z1, Z2, Z3, Zn) sont elles-mêmes formées par des longueurs inégales et/ou une section transversale non uniforme des conducteurs d'amenée de courant aux contacts individuels, ou bien par des longueurs inégales et/ou une section transversale non uniforme des contact individuels eux-mêmes.

5. Dispositif d'amenée de courant selon la revendication 4,
caractérisé en ce que
les contacts individuels sont en céramique conductrice.

6. Dispositif d'amenée de courant selon la revendication 4 ou 5,
caractérisé en ce que
les contacts individuels sont formés par des entailles (8, 9) en forme de peigne, de longueur inégale, pratiquées dans une plaque (3) d'amenée de courant.

7. Dispositif d'amenée de courant selon la revendication 4 ou 5,
caractérisé en ce que
l'on prévoit un nombre de contacts individuels tendant vers l'infini de façon telle que l'électrode repose de manière uniforme sur une ligne contre le dispositif d'amenée de courant, les impédances différentes étant obtenues de ce fait par une réduction de la section transversale en direction de la zone de travail.

8. Dispositif d'amenée de courant selon la revendication 7,
caractérisé en ce que
le dispositif d'amenée de courant (3) est constitué par un corps de révolution qui s'effile coniquement en direction de la zone de travail (5) et qui comporte une ouverture de passage en forme d'hélice le traversant intérieurement et par laquelle passe l'électrode (2), le courant d'usinage étant amené à l'extrémité de plus grande dimension du corps de révolution.

9. Dispositif d'amenée de courant selon la revendication 4,
caractérisé en ce
qu'aucune impédance n'est interposée dans le conducteur d'amenée (34) menant au contact individuel (30) le plus éloigné de la zone de travail (5) et en ce que dans les conducteurs d'amenée de courant suivants sont branchées des impédances Zn dont la valeur d'impédance Zn obéit à la relation suivante;

$$Z_n = Z_{(n-1)} + Z_1 \times n$$

n désignant le nombre ordinal caractérisant le contact d'amenée de courant dans la direction de la zone de travail et $Z_1$ désignant approximativement l'impédance de l'électrode (2) entre deux contacts individuels.

10. Dispositif d'amenée de courant selon l'une des revendications 1 à 8,
caractérisé en ce
qu'il remplit en plus la fonction de guidage de l'électrode.

_Fig.1_

_Fig.2_

Fig. 3

Fig. 4

Fig. 5